# EUROPEAN PATENT SPECIFICATION

(11) **EP 0 694 119 B1**
(45) Date of publication and mention of the grant of the patent: **26.08.1998**
(21) Application number: 94910631.4
(22) Date of filing: 15.03.1994
(51) Int. Cl.: F02B 9/10, F02B 45/02

(54) **IGNITION GAP ARRANGEMENT**
ANORDNUNG EINES ZÜNDSPALTES
CONFIGURATION D'ECARTEMENT DES CONTACTS DU SYSTEME D'ALLUMAGE

(30) Priority: 15.03.1993 SE 9300845
(43) Date of publication of application: 31.01.1996
(73) Proprietor: TÖRNQVIST, Bengt Gunnar, S-114 56 Stockholm (SE); ABOM, Jan, S-421 74 Västra Frölunda (SE)
(72) Inventor: ABOM, Jan, S-421 74 Västra Frölunda (SE)
(74) Representative: Henningsson, Gunnar
(86) International application number: PCT/SE94/00226
(87) International publication number: WO 94/21903

(56) References cited:
- EP-A- 0 260 908
- SE-B- 426 725

## Description

### Technical Field

This invention relates to ignition gaps of the type used in e.g. internal-combustion engines to impart to an injected fuel, preferably in the form of a powder, a temperature enabling the required combustion.

### Prior Art

Swedish Patent Specification 8202835-8 describes an ignition gap device for diesel engines, where wood powder is supplied into the ignition gaps and caused to impinge on the heated gap walls and be progressively ignited.

### Background of the Invention

The major problem in the operation of internal-combustion engines employing solid fuels in powder form is the ignition delay. In diesel engines, the ignition delay is defined as the time elapsing from the moment the fuel is injected into the combustiom chamber until it is ignited.

### Summary of the Invention

The invention has been conceived to enable controlled reduction of the ignition delay and to make more efficient the ignition of the powder. Thus, according to the invention, there is provided an arrangement including ignition gaps or channels in a combustion device, e.g. an internal combustion engine, said gaps or channels imparting in use to an injected finely divided particulate fuel a temperaturesufficient for ignition from the heated walls of the gaps or channels, the arrangement being characterized in that each single gap is formed of two or more substantially straight sections connected at an angle to each other, thus forming in particular a zig-zag shape.

According to a preferred embodiment, the ignition gaps are provided in optional lengths by using a modular technique that can be adapted to prevailing requirements.

### Description of Embodiments

Preferred embodiments of the arrangement according to the invention will be described in more detail hereinbelow with reference to the accompanying drawings, in which
- Fig. 1: is a schematic partial cross-section showing the possible design of an ignition gap section,
- Fig. 2: is a schematic cross-section showing the design of a slightly modified ignition gap device,
- Fig. 3: is a general view, partly in section, showing how the ignition gap device is integrated in an injection mechanism,
- Fig. 4: is a cross-section showing how three ignition gap plates of different hole configuration are joined together to form ignition gaps extending in zig-zag,
- Fig. 5: is an end view of the upper plate in Fig. 4,
- Fig. 6: is an end view of another plate embodiment,
- Figs 7, 8 and 9: are cross-sections of the plate in Fig. 6, taken along the lines A-A, B-B and C-C, respectively, and
- Fig. 10: is an extended view taken along the radius r in Fig. 9 through three plates arranged as in Fig. 4.

### Description of Embodiments

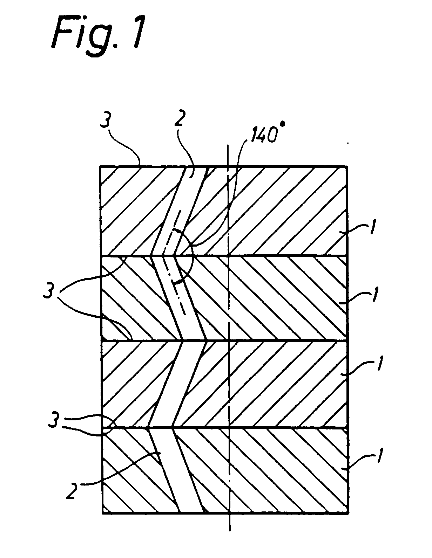

Fig. 1 schematically illustrates the general idea behind the invention, which resides in that the fuel, i.e. usually the powder, is caused during its way up to the injection nozzle in the combustion chamber, to follow a zigzag-shaped path created by ignition gaps or channels 2 formed of several plates or modules 1, each of which comprises one or more channel or gap sections which, when the plates or modules have been placed adjacent each other, form one or more zigzag-shaped gaps or channels, in that the channel or gap sections in the respective plate or module have different directions, but with the inlets and outlets located in the same positions as the inlets and the outlets of adjacent plates or modules. In the embodiment of Fig. 1, the mutual directional deviation of the sections 2 in the three plates 1 is about 140°.

The plates or modules 1 which, as will appear below, will be subjected to high temperatures, are consequently made of ceramics, whose end surfaces 3 are accurately ground and lapped such that they will seal against each other without the need of additional sealing devices and together define the channels or gaps in a substantially leakproof manner.

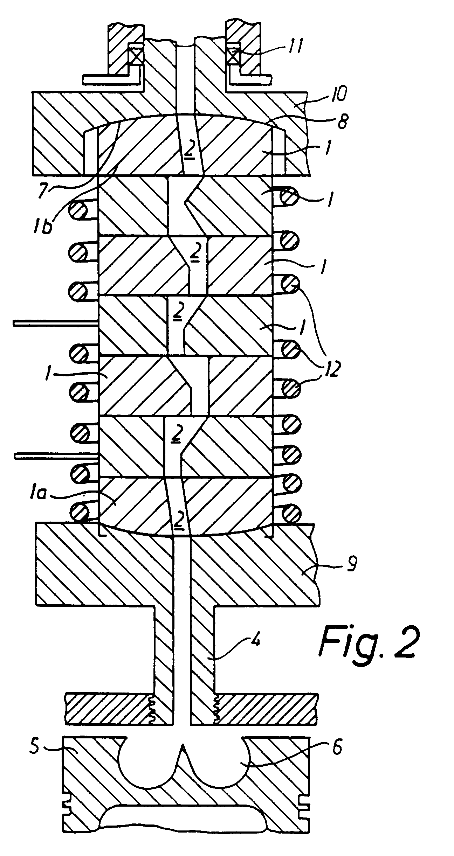

Fig. 2 shows how a number of plates 1 have been arranged adjacent an injection nozzle 4 opening over a piston 5 in the combustion chamber 6 of a diesel engine. In this case, the end plates 1a and 1b have spherically-domed surfaces 7 accurately mating with surfaces 8 of complementary dome shape on a part 9 and 10, fixed to the engine and arranged at the injection mechanism, respectively. The part 10 is provided with a movable gland seal 11 taking up the temperature movements in the plates. The spherical end plates facilitate mounting. This Figure also shows a heating coil or winding 12 serving to heat the plates 1 during the starting phase.

For clarifying purposes, a description of the preferred fuel, being in powder form, will now be given.

In the manufacture of fuel powder for internal combustion engines, the fuel is ground and sifted. In this case, use may be made of beater mills, ball mills, cylpebs mills and pinned disc mills, as well as vacuum mills.

Sifting takes place in wind sifters, basically designed as a centrifugal fan where a gas laden with powder is caused to flow through the fan from the periphery towards the centre. This means that only very small particles can pass the wind sifter. By varying the flow through the fan and its speed of rotation, it is possible to obtain a very fine powder.

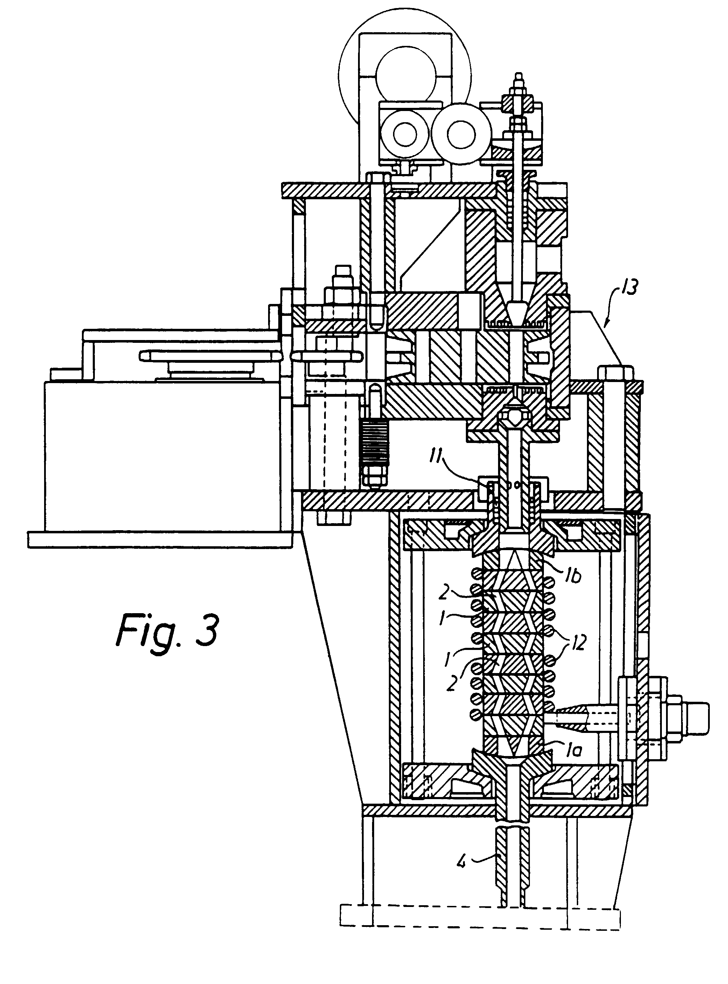

Fig. 3 is a general view partly in section showing how the arrangement according to the invention is integrated in an injection mechanism.

The plates fitted to each other are designated 1, and those having spherical end surfaces 7 are designated 1a and 1b, respectively. The injection nozzle is designated 4, and the injection mechanism feeding and portioning the fuel is generally designated 13. The heating coil is designated 12. Other components in this Figure are illustrated for clarifying purposes only.

As will have been appreciated, it is vital that the plates 1 be joined together in a most accurate manner.

In order that the ignition gaps should function properly, the temperature must be at least 900°C. The engine runs with a minimum emission of smoke when the temperature is 1100°C. Since metallic materials do not withstand such high temperatures, ceramics must be used.

For working ceramics, diamond tools, such as silicon nitride and aluminium oxide, are required.

The cheapest way of producing ceramics is to compression-mould powder which is then sintered at a high temperature. One possibility is to presinter the compression-moulded powder and perform turning and drilling before the final sintering takes place. In the diesel engine described above, the zigzag-shaped ignition gap is formed of ten parts having straight channels with 140°-bends and an ignition gap diameter of 6 mm. The zigzag-shaped ignition gap is obtained from a number of round plates having angled holes. As mentioned above, the plates have been ground and lapped such that, when pressed against each other, there is but negligible leakage between them, see Fig. 1.

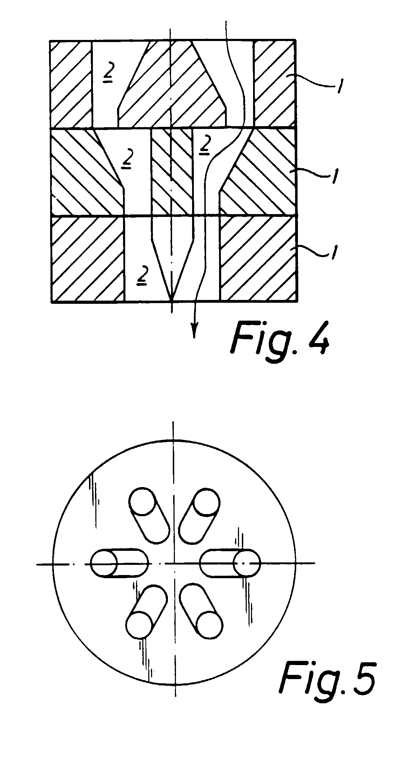

Figs 4 and 5 show a modified design of plates 1, the shape of the channel or gap sections varying in the different plates. This embodiment, like the others, can be compressed to final shape before sintering, the only remaining operation being grinding and lapping.

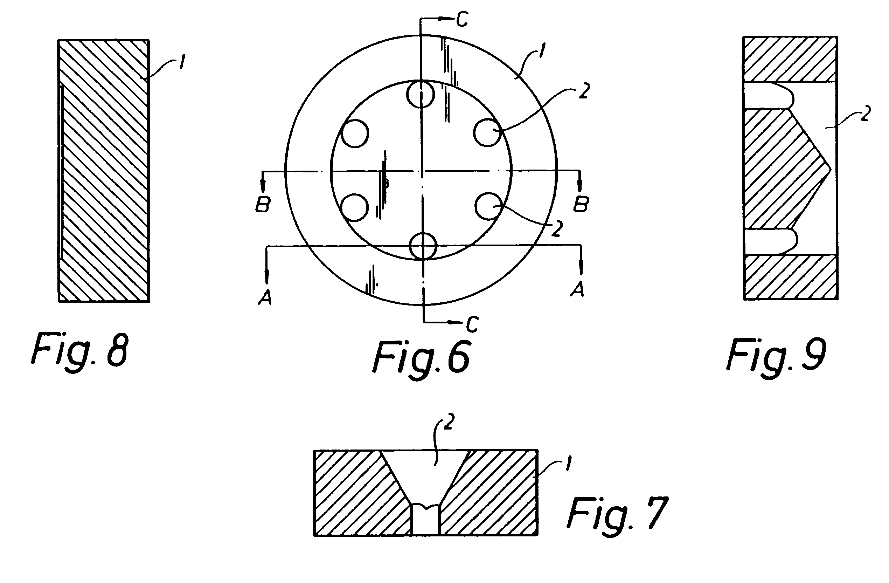

Figs 6, 7, 8 and 9 show yet another plate design which can also be compressed to final shape before sintering and subsequent grinding and lapping. In this embodiment too, a different channel or gap shape is obtainable.

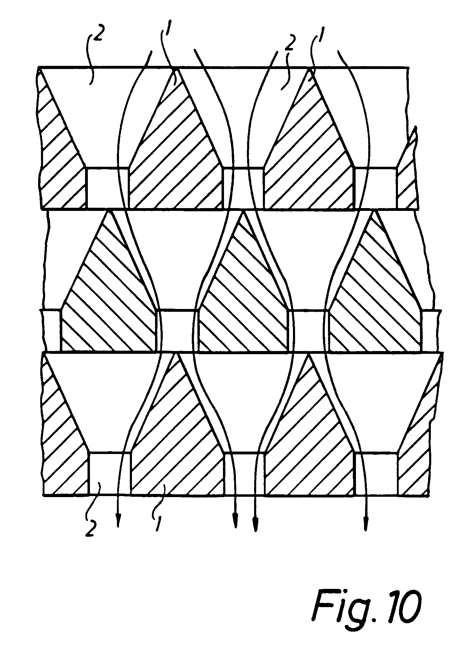

Fig. 10 is an extended schematic view showing how the transport paths for the fuel are formed and how they are given a pronounced zigzag configuration, entailing that the fuel particles are forced to repeatedly impinge on the gap or channel walls, which are strongly heated, which results in the ignition of the fuel when injected into the combustion chamber.

Zigzag-shaped ignition gaps according to the invention can be used for igniting all pulverulent fuels made from wood, straw, grass, bagasse, peat, coal and brown coal for firing furnaces, internal-combustion engines, both Otto and diesel engines, as well as gas turbines. The fuel which is undoubtedly the best is Eucalyptus Teriticornis because of its extremely low ash content. Depending on its habitat, this tree species has less than 0.03% ash based on the dry weight of the wood.

Practical tests have shown that if the fuel particles are smaller than 16 pm with a normal distribution around 8 µm and the solid fuel consists of wood powder that has been hydrolysed (with the aid of superheated formic acid steam at 200°C for 2 h at atmospheric pressure), the ignition delay becomes only 15° at a speed of 3600 rpm if zigzag-shaped gaps or channels having a length of about 200 mm and a diameter of 6 mm are used. The reason why a zigzag-shaped channel or gap is more efficient than a conical one is that the larger particles will impinge on the hot walls a considerable number of times when passing through the ignition gap compared with an expanding gap as described in Patent SE-B-8202835-8.

## Claims

1. An arrangement including ignition gaps or channels in a combustion device, e.g. an internal combustion engine, said gaps or channels imparting in use to an injected finely divided particulate fuel a temperature sufficient for ignition from the heated walls of the gaps or channels, characterized in that
each single gap (2) is formed of two or more substantially straight sections connected at an angle to each other, thus forming in particular a zig-zag shape.

2. An arrangement as claimed in claim 1, **characterised** in that one or more ignition gaps are formed of a number of plates (1) having substantially inclined through openings (2) and arranged one adjacent the other with the ends of the openings corresponding with each other, the openings (2) of adjacent plates having deviating directions.

3. An arrangement as claimed in claim 2, **characterised** in that in the case of a number of plates (1), each having at least one through opening (2), the inclination of the through opening deviates from the normal to the plane of the respective plate by an angular value of the order of 20°.

4. An arrangement as claimed in claim 3, **characterised** in that the plates (1) have a thickness of the order of 20 mm.

5. An arrangement as claimed in claim 1, 2 or 3, **characterised** in that the abutting surfaces (3) of the plates (1) are ground and lapped or otherwise given such a smoothness as to achieve the required tightness.

6. An arrangement as claimed in claim 5, **characterised** in that the plates consist of a ceramic material, that the plates are given the desired shape prior to sintering, and that only the end surfaces (3) are ground and lapped after sintering.

7. An arrangement as claimed in claim 1 or the following claims, **characterised** in that the gaps or channels are formed of plates and at least the two outermost plates (1a, 1b) in a stack of plates exhibit spherically-domed smoothed end surfaces adapted to engage surfaces of complementary shape in support and compression means.

8. An arrangement as claimed in claim 7, **characterised** in that the compression means comprises a gland sealing device, against which the stack of plates (1) is applied, and that the compression means suitably is provided with means for cooling it.

9. An arrangement as claimed in claim 8, **characterised** in that at least one flange device acting on one end of the stack of plates (1) is operable by an external pressure striving to hold the plates (1) compressed.

10. An arrangemant as claimed in any one of the preceding claims, **characterised** in that the gaps or channels are formed of plates and the material of the plates (1) is adapted to withstand a temperature of the order of 1250°C and an internal pulsating pressure of the order of 1-200 bar.

## Patentansprüche

1. Anordnung mit Zündspalte oder -kanälen in einer Verbrennungseinrichtung, d.h., einem Verbrennungsmotor, wobei die Spalte oder Kanäle bei Gebrauch von den erwärmten Wandungen der Spalte oder Kanäle an einen eingespritzten, in Partikel feinzerteilten Kraftstoff eine Temperatur, die für eine Zündung ausreichend ist, übertragen,
dadurch gekennzeichnet, daß
jeder einzelne Spalt (2) aus zwei oder mehreren, im wesentlichen geradlinigen Abschnitten ausgeformt wird, die unter einem Winkel miteinander verbunden sind, wobei sie somit insbesondere eine Zick-Zack-Form bilden.

2. Anordnung nach Anspruch 1, dadurch gekennzeichnet, daß einer oder mehrere Zündspalte aus einer Viehzahl von Platten (1) gebildet werden, die im wesentlichen geneigte Durchgangsausnehmungen (2) aufweisen und wobei eine neben der anderen angeordnet ist, wobei die Endabschnitte der Ausnehmungen einander entsprechen, wobei die Ausnehmungen (2) der benachbarten Platten abweichende Richtungen aufweisen.

3. Anordnung nach Anspruch 2, dadurch gekennzeichnet, daß in dem Fall einer Vielzahl von Platten (1), von welchen jede wenigstens eine Durchgangsausnehmung (2) aufweist, die Neigung der Durchgangsausnehmung von der Senkrechten zu der Ebene der jeweiligen Platte um einen Winkel in der Größenordnung von 20° abweicht.

4. Anordnung nach Anspruch 3, dadurch gekennzeichnet, daß die Platten (1) eine Dicke in der Größenordnung von 20 mm aufweisen.

5. Anordnung nach Anspruch 1, 2 oder 3, dadurch gekennzeichnet, daß die anstoßenden Flächen (3) der Platten (1) geschliffen und feingeschliffen werden oder auf eine andere Art und Weise eine solche Glattheit erhalten, um die erforderliche Dichtheit zu erreichen.

6. Anordnung nach Anspruch 5, dadurch gekennzeichnet, daß die Platten aus einem Keramikmaterial bestehen, daß den Platten die gewünschte Form vor dem Sintern gegeben wird und daß nur die Endflächen (3) nach dem Sintern geschliffen und feingeschliffen werden.

7. Anordnung nach Anspruch 1 oder nach den folgenden Ansprüchen, dadurch gekennzeichnet, daß die Spalte oder Kanäle aus Platten gebildet werden und daß wenigstens die zwei äußersten Platten (1a, 1b) in einem Stapel von Platten sphärisch gewölbte, geglättete Endflächen aufweisen, die geeignet sind, um mit den Flächen der entsprechenden Form in der Halte- und der Druckeinrichtung in Eingriff zu stehen.

8. Anordnung nach Anspruch 7, dadurch gekennzeichnet, daß die Druckeinrichtung eine Flanschdichtungseinrichtung aufweist, gegen die der Stapel von Platten (1) angelegt wird, und daß die Druckeinrichtung auf geeignete Weise mit einer Einrichtung zum Kühlen versehen ist.

9. Anordnung nach Anspruch 8, dadurch gekennzeichnet, daß wenigstens eine Flanscheinrichtung, die auf einen Endabschnitt des Stapels von Platten (1) wirkt, von einem externen Druck betätigt werden kann, der bestrebt ist, die Platten (1) zusammengedrückt zu halten.

10. Anordnung nach einem der vorhergehenden Ansprüche, dadurch gekennzeichnet, daß die Spalte oder Kanäle aus Platten gebildet werden und daß das Material der Platten (1) geeignet ist, einer Temperatur in der Größenordnung von 1250°C und einem Innenwechseldruck in der Größenordnung von 1-200 bar zu widerstehen.

## Revendications

1. Agencement comprenant des espaces ou des canaux d'allumage dans un dispositif de combustion, par exemple un moteur à combustion interne, lesdits espaces ou canaux transmettant, lors de l'utilisation, à un carburant injecté en particules finement divisées une température suffisante pour l'allumage par les parois chauffées des espaces ou des canaux,
caractérisé en ce que
chaque espace simple (2) est constitué de deux sections ou plus sensiblement droites et raccordées en formant un angle entre elles, formant ainsi une forme en zigzag particulière.

2. Agencement selon la revendication 1, caractérisé en ce qu'un ou plusieurs espaces d'allumage se composent d'un certain nombre de plaques (1) ayant des ouvertures débouchantes sensiblement inclinées (2) et disposées de façon adjacente l'une à l'autre avec les extrémités des ouvertures correspondant l'une à l'autre, les ouvertures (2) des plaques adjacentes ayant des directions qui s'écartent.

3. Agencement selon la revendication 2, caractérisé en ce que, dans le cas où il y a plusieurs plaques (1), chacune ayant au moins une ouverture débouchante (2), l'inclinaison de l'ouverture débouchante s'écarte de la perpendiculaire au plan de la plaque respective d'une valeur angulaire de l'ordre de 20°.

4. Agencement selon la revendication 3, caractérisé en ce que les plaques (1) ont une épaisseur de l'ordre de 20 mm.

5. Agencement selon la revendication 1, 2 ou 3, caractérisé en ce que les surfaces en butée (3) des plaques (1) sont rectifiées et rodées ou sont pourvues de toute autre manière d'un poli tel que l'on obtient l'étanchéité requise.

6. Agencement selon la revendication 5, caractérisé en ce que les plaques comprennent un matériau en céramique, en ce que les plaques sont pourvues de la forme requise avant frittage, et en ce que seules les surfaces d'extrémité (3) sont rectifiées et rodées après frittage.

7. Agencement selon la revendication 1 ou les revendications suivantes, caractérisé en ce que les espaces ou les canaux sont constitués de plaques et au moins les deux plaques extérieures (1a, 1b) dans une pile de plaques présentent des surfaces d'extrémité polies en forme de dôme sphérique prévues pour engager des surfaces de forme complémentaire dans des moyens de support et de compression.

8. Agencement selon la revendication 7, caractérisé en ce que les moyens de compression comportent un dispositif d'étanchéité du type presse-étoupe, contre lequel la pile de plaques (1) est appliquée, et en ce que les moyens de compression sont pourvus de manière appropriée de moyens pour les refroidir.

9. Agencement selon la revendication 8, caractérisé en ce qu'au moins un dispositif de bride agissant sur une extrémité de la pile de plaques (1) est mis en oeuvre par une pression externe afin de maintenir les plaques (1) comprimées.

10. Agencement selon l'une quelconque des revendications précédentes, caractérisé en ce que les espaces ou canaux sont constitués de plaques et la matière des plaques (1) est prévue pour supporter une température de l'ordre de 1250 °C et une pression de pulsation interne de l'ordre de 1 à 200 bar.
